# EUROPÄISCHE PATENTSCHRIFT

(11) **EP 3 587 137 B1**
(45) Veröffentlichungstag und Bekanntmachung des Hinweises auf die Patenterteilung: **07.10.2020**
(21) Anmeldenummer: 19179582.2
(22) Anmeldetag: 12.06.2019
(51) Int. Cl.: B42C 19/08, B42C 19/02, B42D 25/24, B25J 15/00, B25J 15/06, B65H 5/08

(54) **HANDHABUNGSVORRICHTUNG UND VERFAHREN ZUM EINLEGEN VON DOKUMENTENTEILEN IN EINE WEITERVERARBEITUNGSVORRICHTUNG**
HANDLING DEVICE AND METHOD FOR INSERTING DOCUMENT PORTIONS IN A PROCESSING DEVICE
DISPOSITIF DE MANIPULATION ET PROCÉDÉ D'INSERTION DE PARTIES DE DOCUMENT DANS UN DISPOSITIF DE TRAITEMENT ULTÉRIEUR

(30) Priorität: 15.06.2018 DE 102018114373
(43) Veröffentlichungstag der Anmeldung: 01.01.2020
(73) Patentinhaber: Bundesdruckerei GmbH, 10969 Berlin (DE)
(72) Erfinder: Matthies, David, 31717 Nordsehl (DE); Schneider, Helmut, 49328 Melle (DE); Iphöfer, Alexander, 32457 Porta Westfalica (DE)
(74) Vertreter: Hentrich Patentanwälte PartG mbB

(56) Entgegenhaltungen:
- DE-A1-102016 218 042
- JP-A- 2002 234 623
- US-A1- 2015 063 972

## Beschreibung

Die Erfindung betrifft eine Handhabungsvorrichtung zur Handhabung von mehreren Dokumententeilen eines Ausweis-, Wert- oder Sicherheitsdokuments. Außerdem betrifft die Erfindung ein Verfahren zum Einlegen zumindest eines ersten Dokumententeils und zumindest eines zweiten Dokumententeils eines Ausweis-, Wert- oder Sicherheitsdokuments in eine Vorrichtung zu deren Weiterverarbeitung (Weiterverarbeitungsvorrichtung).

Buchförmige Ausweis-, Wert- oder Sicherheitsdokumente, beispielsweise Reisepässe, umfassen einen Einband und einen Passbuchblock. Der Passbuchblock weist eine Datenkarte, mehrere Passbuchseiten oder Visaseiten, ein Vorsatzblatt und ein Fälzelband auf, wobei die Datenkarte eine entlang eines Randes mit der Datenkarte verbundene Lasche aufweist. Die Lasche der Datenkarte, die Passbuchseiten, das Vorsatzblatt und das Fälzelband sind mit einer Naht miteinander vernäht. Eine Innenseite des Einbandes ist mit einer Außenseite des Vorsatzblattes verklebt. Außerdem sind der Einband und der Passbuchblock miteinander verklebt und gefaltet. Das Ausweis-, Wert- oder Sicherheitsdokument liegt zunächst in der Form eines Rohlings, insbesondere in der Form eines Passbuchrohlings vor, dessen Ränder auf das erforderliche Endmaß zugeschnitten werden.

In der DE 10 2016 218 046 A1 ist bereits ein System zur Herstellung eines buchartigen Ausweis-, Wert- oder Sicherheitsdokuments beschrieben, welches zur Manipulation oder zum Transport der Einzelbestandteile des Ausweis-, Wert- oder Sicherheitsdokuments unter anderem an einem Roboterarm gelagerte Halte- und Transportvorrichtungen umfasst. Auch die DE 10 2016 218 042 A1 beschreibt eine Halte- und Transportvorrichtung sowie ein Verfahren zum Betrieb dieser Halte- und Transportvorrichtung. Die in den vorstehenden Druckschriften beschriebenen Halte- und Transportvorrichtungen haben sich hinreichend bewährt im Handling des Ausweis-, Wert- oder Sicherheitsdokuments oder Teilen davon.

Die DE 10 2016 218 042 A1 zeigt eine Halte- und Transportvorrichtung, die an einem Roboterarm gelagert ist, und die mehrere Halteeinheiten an einem Kopfteil des Roboterarms aufweist. Bei der darin gezeigten Vorrichtung wird mittels der ersten Halteeinheit die Datenkarte, mittels der zweiten Halteeinheit das Vorblatt und mit der dritten Halteeinheit der Passbuchblock aufgenommen. Diese können dann gemeinsam transportiert und auf entsprechenden Vorrichtungen abgelegt werden.

Die JP 2002-234 623 A beschreibt eine Vorrichtung zur vereinzelten Entnahme blattförmiger Gegenstände. Hierbei sind die beiden Sauggreifer sowie die die Sauggreifer bereitstellenden Saugarme unter einem Winkel zueinander angeordnet, so dass das blattförmige Gut beim Aufnehmen gebogen wird, um eine Vereinzelung zu bewirken.

In der US 2015 / 0 063 972 ist ein Roboterarm zum Ergreifen einer Mehrzahl von Kartons beschrieben, wobei eine Vielzahl von einzelnen Sauggreifern an diesem Roboterarm vorhanden ist. DE 10 2016 218042 A1, JP 2002 234623 A oder US 2015/063972 A1 offenbart den Oberbegriff des Anspruchs 1.

Es ist jedoch die Aufgabe der vorliegenden Erfindung, eine Handhabungsvorrichtung zur Handhabung von mehreren Dokumententeilen eines Ausweis-, Wert- oder Sicherheitsdokuments bereitzustellen, durch die sich die Taktzeit zur Herstellung des Ausweis-, Wert- oder Sicherheitsdokuments weiter reduzieren lässt. Außerdem ist es Aufgabe der vorliegenden Erfindung, ein Verfahren der eingangs genannten Art derart weiterzubilden, das ebenfalls zu einer Reduzierung der Taktzeit für die Herstellung des Ausweis-, Wert- oder Sicherheitsdokuments führt.

Die die Handhabungsvorrichtung betreffende Aufgabe wird mit einer Handhabungsvorrichtung mit den Merkmalen des Anspruchs 1 gelöst. Vorteilhafte Ausgestaltungen mit zweckmäßigen Weiterbildungen der Vorrichtung sind in den davon abhängigen Ansprüchen angegeben.

Die Handhabungsvorrichtung zur Handhabung von mehreren Dokumententeilen eines Ausweis-, Wert- oder Sicherheitsdokuments zeichnet sich insbesondere durch eine Halteplatte aus, an der ein erster Sauggreifer zum lösbaren Fixieren eines ersten Dokumententeils an der Halteplatte angeordnet ist. Außerdem ist an der Halteplatte ein, von dem ersten Sauggreifer beabstandeter, zweiter Sauggreifer angeordnet zum lösbaren Fixieren eines zweiten Dokumententeils an der Halteplatte während zumindest zeitweise der erste Dokumententeil ebenfalls an der Halteplatte lösbar fixiert ist.

Die Handhabungsvorrichtung weist also den Vorteil auf, dass der erste Dokumententeil, insbesondere die Datenkarte mit Lasche, gleichzeitig mit dem zweiten Dokumententeil, insbesondere das Vorsatzblatt mit Fälzelband, an der Halteplatte fixiert werden können, um beide Dokumententeile gleichzeitig transportieren und/oder handhaben und/oder manipulieren zu können. Während bei bestehenden Systemen beispielsweise vor dem Vernähen des Passbuchblocks (bestehend aus Datenkarte mit Lasche, Vorsatzblatt mit Fälzelband und den Passbuchseiten) die Datenkarte in einem ersten Manipulationsschritt in eine Rütteleinrichtung und das Vorsatzblatt mit Fälzelband in einem zweiten Manipulationsschritt in die Rütteleinrichtung eingelegt wurden, so kann nun mit der hier beschriebenen Handhabungsvorrichtung ein einziger Manipulationsschritt aufgrund des gemeinsamen Transports der Datenkarte und des Vorsatzblattes realisiert werden und die Dokumententeile gemeinsam, insbesondere gleichzeitig, in die Rütteleinrichtung eingelegt werden. Dies führt zu einer Taktzeitreduzierung bei der Herstellung von Ausweis-, Wert- oder Sicherheitsdokumenten.

Es hat sich als vorteilhaft erwiesen, wenn die Halteplatte der Handhabungsvorrichtung mit den Sauggreifern derart ausgebildet ist, den ersten Dokumententeil in einer ersten Ebene und den zweiten Dokumententeil in einer zweiten Ebene zu fixieren, wobei vorzugsweise die erste Ebene parallel zur zweiten Ebene ausgerichtet ist. Das bietet den Vorteil, dass der erste Dokumententeil und der zweite Dokumententeil räumlich überlagert sind, womit aufgrund der gleichzeitigen Fixierung beider Dokumententeile ein Verfahrweg eingespart werden kann.

In diesem Zusammenhang hat es sich ebenfalls als sinnvoll erwiesen, wenn die Halteplatte erfindungsgemäß einen erhabenen Bereich und einen zumindest gegenüber dem erhabenen Bereich vertieften Bereich umfasst. Dabei ist der eine aus erstem Sauggreifer und zweitem Sauggreifer im erhabenen Bereich angeordnet und der andere aus erstem Sauggreifer und zweitem Sauggreifer im vertieften Bereich angeordnet. Das bedeutet, wenn der erste Sauggreifer im erhabenen Bereich angeordnet ist, so ist der zweite Sauggreifer im vertieften Bereich angeordnet, und umgekehrt. Auch dadurch wird eine räumliche Überlagerung der beiden Dokumententeile realisiert.

Um die Handhabungsvorrichtung leicht zu gestalten und um eine Unterdruckeinrichtung räumlich von der Handhabungsvorrichtung absetzen zu können, hat es sich als sinnvoll erwiesen, wenn die Sauggreifer mittels einer Saugleitung mit einem Unterdruckanschluss zum Anschluss an eine Unterdruckeinrichtung verbunden sind. Um den Manipulator oder die Handhabungsvorrichtung besonders kompakt zu gestalten, kann zusätzlich die Saugleitung durch eine Durchführung der Halteplatte geführt sein oder in eine solche Durchführung münden derart, dass der Unterdruckanschluss mit dem korrespondierenden Sauggreifer strömungsverbunden ist.

Um den einen oder die mehreren der ersten Sauggreifer und den einen oder die mehreren der zweiten Sauggreifer selektiv ansteuern zu können, hat es sich als sinnvoll erwiesen, wenn der erste Sauggreifer mittels einer ersten Unterdruckeinrichtung betätigbar ist, und wenn der zweite Sauggreifer mittels einer zweiten Unterdruckeinrichtung betätigbar ist.

Es hat sich als vorteilhaft erwiesen, wenn die Sauggreifer als Balgsauger mit einem bezüglich ihrer Längsachse komprimierbaren Balg gebildet sind. Solche Balgsauger haben sich bewährt beim Greifen und Handhaben von Dokumententeilen, die aus Papier oder aus einer kunststoffbasierten Karte gebildet sind.

Um die Handhabungsvorrichtung bei einem automatisierten System einsetzen zu können, ist es sinnvoll, wenn eine Montageplatte zur Festlegung der Handhabungsvorrichtung an einem Roboterarm oder an einem Roboterarmteil vorhanden ist. Zur sicheren und leckagefreien Führung der Saugleitungen hat es sich zudem als vorteilhaft erwiesen, wenn die Montageplatte mittels eines oder mittels mehrerer Distanzhalter von der Halteplatte beabstandet angeordnet ist.

Ebenfalls im Hinblick auf eine leckagefreie Anbindung der Sauggreifer an die Halteplatte sowie hinsichtlich einer möglichst robuste Gestaltung der Handhabungsvorrichtung, ist es sinnvoll, wenn die Halteplatte an einer Lagerplatte festgelegt ist, und wenn an der Lagerplatte Anschlussnippel zur Anbindung der Sauggreifer angeordnet sind.

Die das Verfahren betreffende Aufgabe wird mit einem Verfahren mit den Merkmalen des Anspruchs 8 gelöst. Dieses betrifft insbesondere ein Verfahren zum Einlegen zumindest eines ersten Dokumententeils und zumindest eines zweiten Dokumententeils eines Ausweis-, Wert- oder Sicherheitsdokuments in eine Vorrichtung zu deren Weiterverarbeitung (Weiterverarbeitungsvorrichtung), das Verfahren umfasst die Schritte:
- Fixieren des ersten Dokumententeils an einer Halteplatte einer Handhabungsvorrichtung mittels eines ersten Sauggreifers;
- Fixieren eines zweiten Dokumententeils an der Halteplatte der Handhabungsvorrichtung mittels eines vom ersten Sauggreifer beabstandeten zweiten Sauggreifers während zumindest zeitweise der erste Dokumententeil ebenfalls an der Halteplatte lösbar fixiert ist; und
- Lösen des ersten Dokumententeils vom ersten Sauggreifer und Lösen des zweiten Dokumententeils vom zweiten Sauggreifer und damit Einlegen des ersten Dokumententeils und des zweiten Dokumententeils in die Vorrichtung zu deren Weiterverarbeitung.

Mit dem Verfahren ist der Vorteil verbunden, dass zwei Dokumententeile gleichzeitig mittels der Handhabungsvorrichtung gehalten und transportiert werden können, womit die Anzahl an Verfahrwegen reduziert wird. Dies führt zu einer gewünschten Taktzeitreduzierung zur Herstellung eines Ausweis-, Wert- oder Sicherheitsdokuments.

In diesem Zusammenhang hat es sich insbesondere als vorteilhaft erwiesen, wenn die Vorrichtung zur Weiterverarbeitung eine Rütteleinrichtung ist, und wenn der erste Dokumententeil und der zweite Dokumententeil durch Rütteln zueinander ausgerichtet werden.

Diese Rütteleinrichtung wird eingesetzt, um die Dokumententeile zueinander auszurichten, bevor sie zu einem Passbuchblock vernäht werden. Die einzelnen Dokumententeile sind dabei vorzugsweise die Datenkarte mit Lasche (erster Dokumententeil), das Vorsatzblatt mit Fälzelband (zweiter Dokumententeil) sowie die Passbuch- oder Visaseiten. Nach dem gegenseitigen Ausrichten der einzelnen Dokumententeile zueinander kann ein Vernähen mittels einer Nähvorrichtung entlang der Mittellinie erfolgen. Da der erste Dokumententeil und der zweite Dokumententeil gleichzeitig in die Vorrichtung zur Weiterverarbeitung eingelegt werden ist eine signifikante Zeitersparnis beim Handling zu verzeichnen.

Weitere Vorteile, Merkmale und Einzelheiten der Erfindung ergeben sich aus den Ansprüchen, der nachfolgenden Beschreibung einer bevorzugten Ausführungsform, sowie anhand der Zeichnungen. Dabei zeigen:
- Fig. 1: eine perspektivische Ansicht eines buchartigen oder buchförmigen Ausweis-, Wert- oder Sicherheitsdokuments,
- Fig. 2a)-2f): Verfahrensschritte zur Herstellung des buchförmigen Ausweis-, Wert- oder Sicherheitsdokuments aus Figur 1,
- Fig. 3: eine perspektivische Ansicht von oben auf die Handhabungsvorrichtung,
- Fig. 4: eine Seitenansicht von links (auf die kurze Kante) der Handhabungsvorrichtung nach Figur 3,
- Fig. 5: eine Frontansicht (auf die lange Kante) der Handhabungsvorrichtung nach Figur 3, und
- Fig. 6: eine perspektivische Ansicht (von unten) auf die Handhabungsvorrichtung aus Figur 3, welche an einem Roboterarm eines Roboters festgelegt ist.

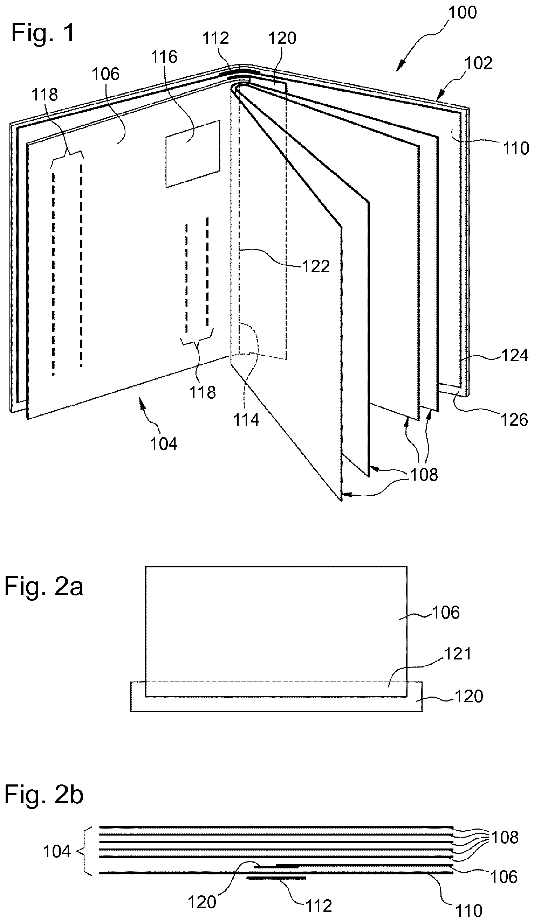

In Figur 1 ist ein buchförmiges Ausweis-, Wert- oder Sicherheitsdokument 100 gezeigt. Das Ausweis-, Wert- oder Sicherheitsdokument 100 ist beispielsweise ein Identifikationsdokument, insbesondere ein Reisepass oder ein Personalausweis. Das Ausweis-, Wert- oder Sicherheitsdokument 100 weist einen Einband 102 sowie einen im Einband 102 gehaltenen Passbuchblock 104 auf. Der Passbuchblock 104 besteht aus einer Datenkarte 106, mehreren Passbuchseiten 108, einem Vorsatzblatt 110 sowie einem Fälzelband 112, die mit einer Naht 114 miteinander verbunden sind.

Die Datenkarte 106 ist eine kunststoff- oder papierbasierte Karte, auf der personen- und/oder dokumentenspezifische Informationen aufgebracht sind. Beispielsweise kann die Datenkarte 106 ein Passbild 116 und personenbezogene Informationen 118 eines Nutzers aufweisen. Die Informationen 118 sind vorzugsweise in einer maschinenlesbaren Form auf die Datenkarte 106 aufgebracht. Die Datenkarte 106 weist ebenfalls ein maschinenlesbares Identifikationsmerkmal auf, das die Datenkarte 106 eindeutig während des Herstellungsprozesses des Ausweis-, Wert- oder Sicherheitsdokuments 100 identifiziert. Die Datenkarte 106 weist des Weiteren einen Chip auf, in dem personen- und/oder dokumentenspezifische Informationen gespeichert werden können. Insbesondere weist der Chip einen gesicherten Speicherbereich zur Speicherung der personen- und/oder dokumentenspezifischen Informationen auf. Des Weiteren kann die Datenkarte 106 sichtbare und/oder unsichtbare Sicherheitsmerkmale aufweisen, die ein Fälschen der Datenkarte 106 verhindern.

An der Datenkarte 106 ist eine, insbesondere flexible, Lasche 120 vorgesehen, die aus einem Endlosband hergestellt ist. Das Endlosband besteht aus einem Gewebe, das mit einem flexiblen Kunststoffmaterial beschichtet und/oder ummantelt ist. Die Lasche 120 ist form- und/oder stoffschlüssig an der Datenkarte 106 befestigt und somit Teil der Datenkarte 106. Auf der Lasche 120 können weitere Sicherheitsmerkmale vorgesehen sein.

Die Passbuchseiten 108 sind jeweils aus einem Druckbogen, vorzugsweise einem Papierbogen geschnitten und entlang ihrer Mittellinie 122 gefaltet. Die Passbuchseiten 108 können bedruckt sein, beispielsweise mit weiteren personen- und/oder dokumentenspezifischen Informationen, Seitenzahlen oder anderen Informationen. Im Falle des deutschen Reisepasses werden diese personen- und/oder dokumentenspezifischen Daten und Informationen unter Ziffern 11 bis 14 auf der ersten oder den ersten Passbuchseiten 108 aufgedruckt oder aufgebracht sein. Die Passbuchseiten 108 können des Weiteren für den Empfang von Stempeln, beispielsweise Visastempeln, vorbereitet sein. Vorzugsweise enthalten die Passbuchseiten 108 ebenfalls Sicherheitsmerkmale, die ein Fälschen der Passbuchseiten 108 verhindern. Die Sicherheitsmerkmale können beispielweise aufgedruckt, in die Passbuchseiten 108 eingearbeitet oder in diese eingebracht sein. Beispielsweise enthalten die Passbuchseiten 108 eine Perforation, wobei sich die Perforation durch die Passbuchseiten 108 vorzugsweise konisch verjüngt.

Das Vorsatzblatt 110 bildet den äußeren Abschluss des Passbuchblocks 104. Mit einer Außenseite 124 des Vorsatzblattes 110 wird der Passbuchblock 104 auf eine Innenseite 126 des Einbandes 102 aufgeklebt.

Das Fälzelband 112 dient als Verstärkung des Nahtbereichs und wird vor dem Vernähen des Passbuchblocks 104 auf die Außenseite 124 des Vorsatzblattes 110 aufgeklebt.

Die Herstellung des Ausweis-, Wert- oder Sicherheitsdokuments 100 soll nachfolgend anhand der Figuren 2a bis 2f beschrieben werden.

In einem ersten Verfahrensschritt wird die Datenkarte 106 bereitgestellt und die Lasche 120 an der Datenkarte angebracht (Figur 2a). Dabei wird die Lasche 120 in einem Überlappungsbereich 121 form- und/oder stoffschlüssig mit der Datenkarte 106 verbunden und auf die gewünschte Länge geschnitten.

Ferner wird das Fälzelband 112 auf den Nahtbereich des Vorsatzblattes 110 aufgebracht. Dann werden das Vorsatzblatt 110 mit dem Fälzelband 112, die Datenkarte 106 mit Lasche 120 und die Passbuchseiten 108 zusammengestellt (Figur 2b), wobei die Datenkarte 106 derart in den Passbuchblock 104 eingelegt wird, dass die Lasche 120 im Nahtbereich angeordnet ist. Zur Erzielung der gewünschten gegenseitigen Lage des Vorsatzblattes 110 mit dem Fälzelband 112, der Datenkarte 106 mit der Lasche 120 und der Passbuchseiten 108, wird eine nicht näher dargestellte Rütteleinrichtung verwendet.

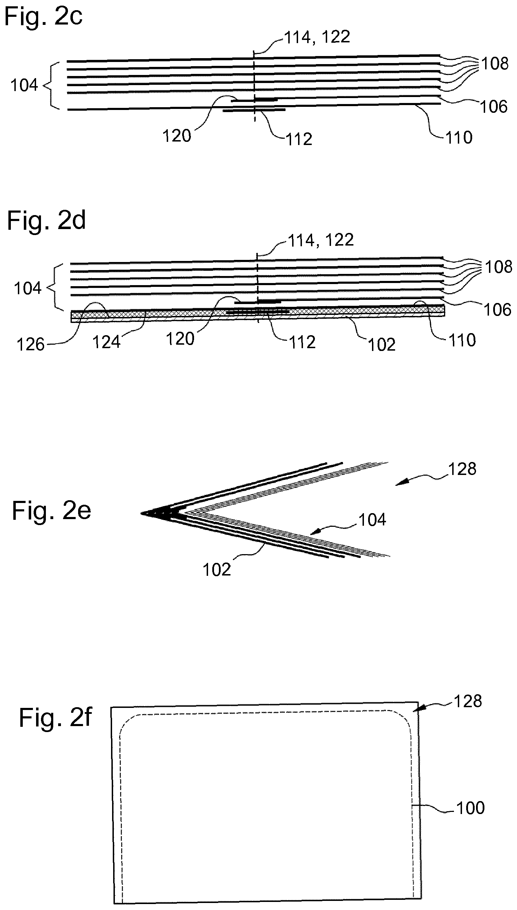

Anschließend wird der Passbuchblock 104 mit einer Naht 114 entlang der Mittellinie 122 der Passbuchseiten 108 vernäht (Figur 2c). Nach dem oder zeitgleich mit dem Vernähen des Passbuchblocks 104 wird der Einband 102 bereitgestellt. Die Innenseite 126 des Einbands 102 wird mit der Außenseite 124 des Vorsatzblattes 110 gefaltet und anschließend verklebt, so dass ein Passbuchrohling 128 entsteht (Figuren 2d und 2e). Abschließend werden die freien Ränder des Passbuchrohlings 128 bearbeitet und somit der Passbuchrohling 128 auf das endgültige Format des Ausweis-, Wert- oder Sicherheitsdokuments 100 geschnitten (Figur 2f).

Die vorliegende Erfindung betrifft das Einlegen des Vorsatzblattes 110 mit dem Fälzelband 112 und der Datenkarte 106 mit der Lasche 120 in die Rütteleinrichtung, wozu eine Handhabungsvorrichtung 200 eingesetzt wird.

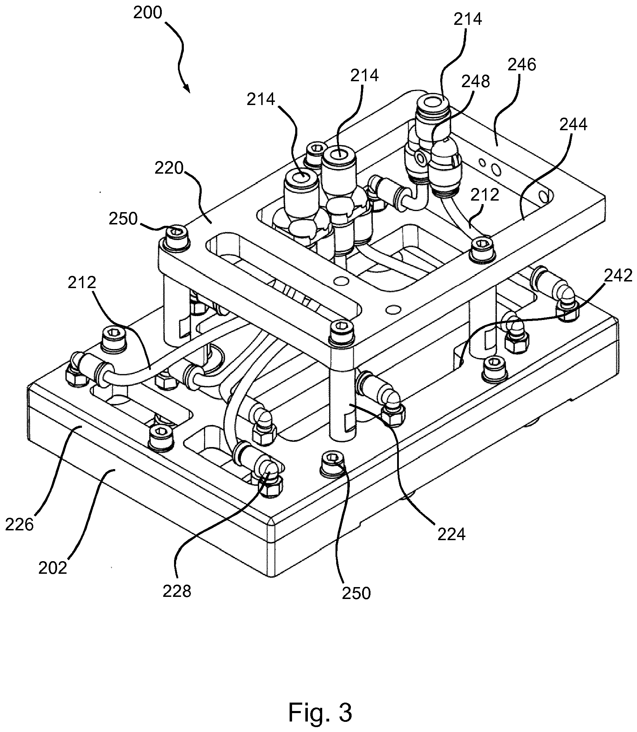

In Figur 3 ist die Handhabungsvorrichtung 200 gezeigt, die eine in der Figur unten angeordnete Halteplatte 202 umfasst, an der die Dokumententeile lösbar zeitweise fixiert werden können. Die Halteplatte 202 ist vorliegend an einer Lagerplatte 226 mit mehreren Schrauben 250 fixiert. Die Lagerplatte 226 umfasst eine oder mehrere Aussparungen 242, die der Verringerung des Gesamtgewichts der Handhabungsvorrichtung 200 zuträglich sind. Die Lagerplatte 226 ist aber im Grunde rahmenförmig an der Halteplatte 202 befestigt oder an dieser angeordnet. Mit der Lagerplatte 226 ist außerdem eine Montageplatte 220 verbunden, wobei zwischen der Lagerplatte 226 und der Montageplatte 220 ein oder mehrere Distanzhalter 224 vorgesehen sind, die einenends mit der Lagerplatte 226 und anderenends mit der Montageplatte 220 verbunden, insbesondere verschraubt sind. Vorliegend sind insgesamt vier der Distanzhalter 224 vorhanden, wobei eine andere Anzahl möglich ist. Die Distanzhalter 224 sind ausgestaltet, die Montageplatte 220 in einem vorgegebenen Abstand von der Lagerplatte 226 und damit von der Halteplatte 202 anzuordnen.

Die Montageplatte 220 weist eine Montageleiste 246 auf, so dass die Handhabungsvorrichtung 200 an einem Roboterarm festgelegt werden kann. Zudem weist die Montageplatte 220 einen Durchtritt 244 auf, so dass Unterdruckanschlüsse 214 durch die Montageplatte 220 geführt werden können. Die Unterdruckanschlüsse 214 sind vorliegend mit einem Verteiler 248 gebildet, so dass ein einziger Unterdruckanschluss 214 mit einer Mehrzahl von Saugleitungen 212 strömungsmechanisch verbunden ist. Die Saugleitungen 212 führen zu an der Lagerplatte 226 fixierten Anschlussnippeln 228.

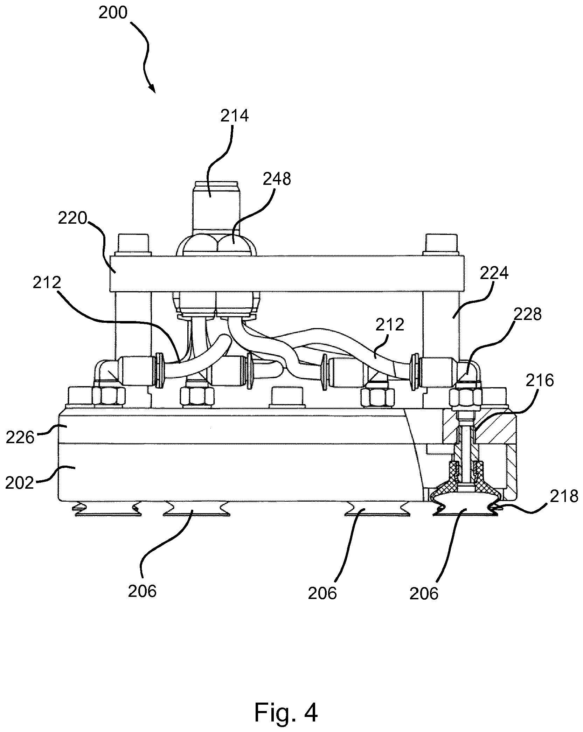

Wie sich insbesondere aus Figur 4 ergibt, sind die Anschlussnippel 228 mittels einer Gewindeverbindung in die Lagerplatte 226 geschraubt und münden in eine in der Lagerplatte 226 und/oder in der Halteplatte 202 ausgebildete Durchführung 216. Diese Durchführung 216 führt zu einem Sauggreifer 204, 206. Alle Sauggreifer 204, 206 der Handhabungsvorrichtung 200 sind vorliegend als Balgsauger mit einem bezüglich ihrer Längsachse, komprimierbaren Balg 218 gebildet. Die Sauggreifer 204, 206 sind außerdem rotationssymmetrisch bezüglich ihrer Längsachse ausgestaltet. Die gewählte Konfiguration führt dazu, dass ein am Unterdruckanschluss 214 angelegter Unterdruck über die Verteiler 248, die Saugleitung 212, den Anschlussnippel 228 und die Durchführung 216 an den Sauggreifern 204, 206 angelegt wird, wobei der Balg 218 beim Erfassen eines Dokumententeils entlang der Lächsachse komprimiert wird.

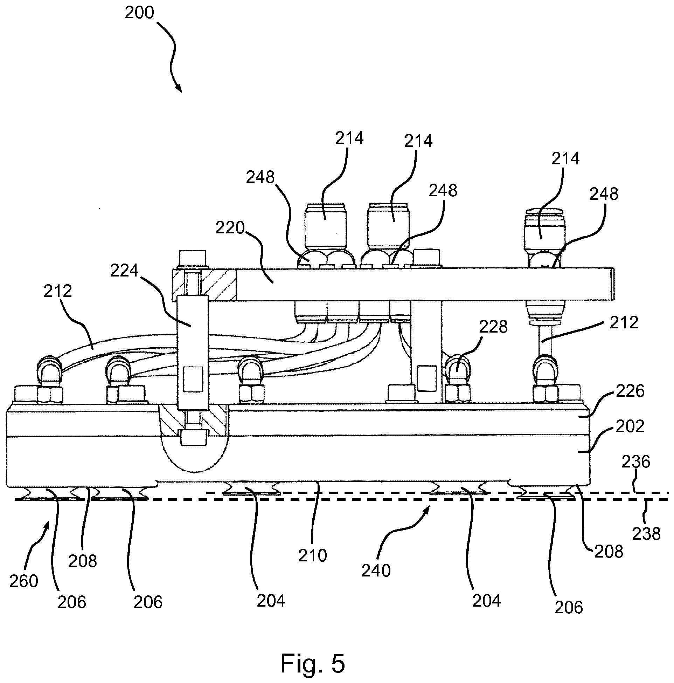

Wie sich aus Figur 5 ergibt, ist vorliegend ein erster Sauggreifer 204 zum lösbaren Fixieren eines ersten Dokumententeils, insbesondere der Datenkarte 106 mit Lasche 120, an der Halteplatte 202 angeordnet. Vorliegend sind mehrere erste Sauggreifer 204 vorhanden, die gemeinsam eine Greiferanordnung 240 erster Greifer bilden. Zudem ist an der Halteplatte 202 ein, von dem ersten Sauggreifer 204 beabstandeter, zweiter Sauggreifer 206 angeordnet zum lösbaren Fixieren eines zweiten Dokumententeils, insbesondere des Vorsatzblatts 110 mit Fälzelband 112, an der Halteplatte 202, während zumindest zeitweise der erste Dokumententeil ebenfalls an der Halteplatte 202 lösbar fixiert ist. Vorliegend ist eine Mehrzahl von zweiten Greifern 206 vorhanden, die damit eine Greiferanordnung 260 zweiter Greifer bildet.

Die ersten Sauggreifer 204 sind ausgebildet, den ersten Dokumententeil in einer ersten Ebene 236 zu fixieren und die zweiten Sauggreifer 206 sind ausgebildet, den zweiten Dokumententeil in einer zweiten Ebene 238 zu fixieren, womit sich eine räumliche Überlagerung aus dem ersten Dokumententeil und dem zweiten Dokumententeil ergibt. Die beiden Ebenen 236, 238 lassen sich dadurch realisieren, dass die ersten Sauggreifer 204 in einem vertieften Bereich 210 der Halteplatte 202 angeordnet sind, und dass die zweiten Sauggreifer 206 in einem gegenüber dem vertieften Bereich 210 erhabenen Bereich 208 der Halteplatte 202 angeordnet sind.

Weiterhin ist zu erkennen, dass vorliegend insgesamt drei der Unterdruckanschlüsse 214 vorhanden sind, wobei der in der Zeichnung rechts dargestellte Unterdruckanschluss 214 einen mit zwei der Saugleitungen 212 verbundenen Verteiler 248 umfasst, die mit zwei der zweiten Sauggreifern 206 strömungsverbunden sind. Der in der Zeichnung links dargestellte Unterdruckanschluss 214 weist einen Verteiler 248 auf, der insgesamt mit vier der Saugleitungen 212 verbunden ist, so dass der links dargestellte Unterdruckanschluss 214 mit vier der zweiten Sauggreifer 206 strömungsmechanisch verbunden ist. Der in der Zeichnung mittig dargestellte Unterdruckanschluss 214 weist ebenfalls einen mit vier der Saugleitungen 212 verbundenen Verteiler 248 auf, so dass vier der ersten Sauggreifer 204 mit dem in der Zeichnung mittig dargestellten Unterdruckanschluss 214 strömungsmechanisch verbunden sind. Der Einsatz einer anderen Anzahl an Unterdruckanschlüssen 214, einer anderen Anzahl an Verteilern 248 und/oder einer anderen Anzahl an Saugleitungen 212 ist in Abhängigkeit der gewählten Konfiguration oder in Abhängigkeit der Anzahl an Sauggreifern 204, 206 selbstverständlich möglich.

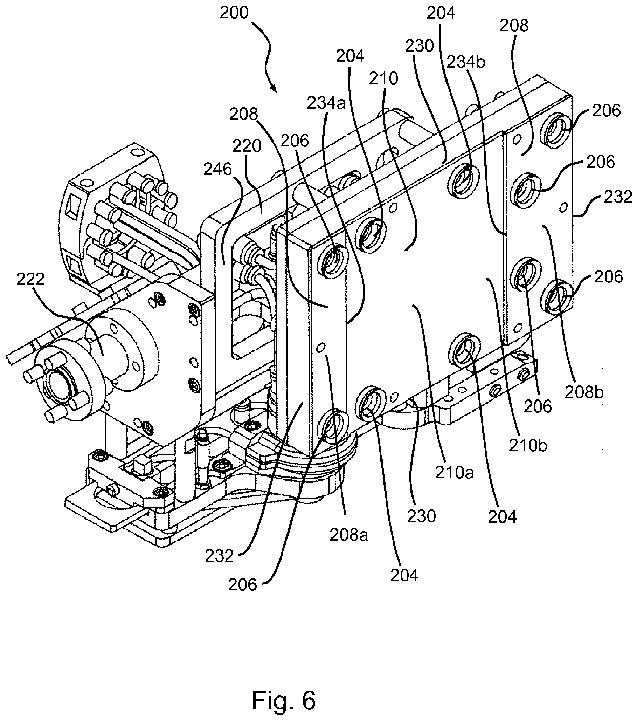

In Figur 6 ist die Unteransicht der Halteplatte 202 gezeigt, wobei die Montageplatte 220 mit ihrer Montageleiste 246 an einem Roboterarmteil 222 festgelegt ist. Es ist zu erkennen, dass der erhabene Bereich 208 sich aus einem ersten erhabenen Teilbereich 208a (links) und einem zweiten erhabenen Teilbereich 208b (rechts) zusammensetzt. Die beiden erhabenen Teilbereiche 208a, 208b erstrecken sich beidseitig jeweils bis zur langen Kante 230 der Halteplatte 202. Zwischen den beiden erhabenen Teilbereichen 208a, 208b ist der vertiefte Bereich 210 angeordnet, der sich einerseits mittels einer ersten Stufe 234a vom ersten erhabenen Teilbereich 208a und andererseits vom zweiten erhabenen Teilbereich 208b mittels einer zweiten Stufe 234b absetzt. Auch der vertiefte Bereich 210 erstreckt sich über die komplette Breite, d.h. von der oberen langen Kante 230 bis zur unteren langen Kante 230 der Halteplatte 202.

Die Greiferanordnung 240 mit den ersten Sauggreifern 204 ist im vertieften Bereich 210 angeordnet. Der vertiefte Bereich 210 weist vorliegend einen, insbesondere sauggreiferfreien, Laschenbereich 210b auf, womit die beiden rechts angeordneten ersten Sauggreifer 204 von der zweiten Stufe 234b in einem vorgegebenen Abstand positioniert sind, welcher vorzugsweise ungefähr zwischen 10 Millimeter und 20 Millimeter beträgt. Vorliegend sind die ersten Sauggreifer 204 ungefähr zwischen 14 Millimeter und 18 Millimeter, insbesondere ungefähr 16 Millimeter von der zweiten Stufe 234b beabstandet angeordnet. Im Laschenbereich 210b ist die Lasche 120 der Datenkarte 106 beim Greifvorgang angeordnet. Die Lasche 120 ist vorzugsweise aus einem textilen Material gebildet und lässt sich mit den ersten Sauggreifern 204 deshalb schlechter greifen als die Datenkarte 106, welche vorzugsweise aus Kunststoff gebildet ist. Dementsprechend weist der vertiefte Bereich 210 einen zum Laschenbereich 210b benachbarten Kartenbereich 210b auf, in welchem die ersten Sauggreifer 204 angeordnet sind. Die ersten Sauggreifer 204 sind in den Ecken eines gedachten Rechtecks positioniert, so dass die Datenkarte 106 ebenfalls an ihren Ecken ergriffen und damit sicher an der Halteplatte 202 fixiert wird.

Die Greiferanordnung 260 der zweiten Sauggreifer 206 ist zu derjenigen der ersten Sauggreifer 204 ähnlich ausgestaltet, wobei vier der zweiten Sauggreifer 206 ebenfalls in den Ecken eines gedachten Rechtecks angeordnet sind. Diese Sauggreifer sind benachbart zu den kurzen Kanten 232 der Halteplatte 202 positioniert. Vorliegend sind zur zusätzlichen Fixierung des zweiten Dokumententeils zwei zusätzliche zweite Sauggreifer 206 vorgesehen, die nach innen versetzt und damit unter einem erhöhtem Abstand von der langen Kante 230 und unter einem erhöhten Abstand von der (rechtsseitigen) kurzen Kante 232 der Halteplatte 202 angeordnet sind.

Im gezeigten Ausführungsbeispiel lassen sich alle der ersten Sauggreifer 204 mittels einer ersten Unterdruckeinrichtung betätigen, die an dem in Figur 5 dargestellten mittleren Unterdruckanschluss 214 angeschlossen ist. Zudem lassen sich alle zweiten Sauggreifer 206, die im ersten erhabenen Teilbereich 208a angeordnet sind, mittels einer weiteren Unterdruckeinrichtung betätigen, die an dem in Figur 5 rechts dargestellten Unterdruckanschluss 214 angeschlossen ist. Letztlich lassen sich die zweiten Sauggreifer 206, welche im zweiten erhabenen Teilbereich 208b angeordnet sind, mittels einer Unterdruckeinrichtung betätigen, die an den in Figur 5 links dargestellten Unterdruckanschluss 214 angeschlossen ist.

Der in Figur 6 gezeigte Roboterarmteil 222 ermöglicht eine Bewegung der Halteplatte 202 um fünf oder auch um sechs Achsen, so dass für die Handhabungsvorrichtung 200 eine größtmögliche flexible Einsatzmöglichkeit geschaffen ist.

Die vorliegende Handhabungsvorrichtung 200 wird insbesondere folgendermaßen eingesetzt: Zunächst wird die Datenkarte 106 mit Lasche 120 an einer Vorrichtung zum Anbringen der Lasche 120 der Datenkarte 106 bereitgestellt. Die Handhabungsvorrichtung 200 fixiert die Datenkarte 106 mit Lasche 120 in ihrem vertieften Bereich 210 mittels der ersten Sauggreifer 204, derart, dass die Datenkarte 106 im Kartenbereich 210a, und dass die Lasche 120 im Laschenbereich 210b der Halteplatte 202 positioniert ist. Anschließend wird das Vorsatzblatt 110 mit Fälzelband 112 an einer Klebevorrichtung bereitgestellt. Das Vorsatzblatt 110 mit Fälzelband 112 wird mittels der zweiten Sauggreifer 206 am erhabenen Bereich 208 der Halteplatte 202 fixiert, derart, dass das Vorsatzblatt 110 mit Fälzelband 112 die Datenkarte 106 mit Lasche 120 räumlich überlagert.

Anschließend wird die Handhabungsvorrichtung 200 mit dem Roboter zu einer Weiterverarbeitungsvorrichtung, insbesondere zu einer Rütteleinrichtung gefahren, wobei das Vorsatzblatt 110 mit Fälzelband 112 und die Datenkarte 106 mit Lasche 120, insbesondere gleichzeitig, in die Rütteleinrichtung eingelegt werden.

Die Handhabungsvorrichtung 200 zeichnet sich im Ergebnis durch die Möglichkeit der Reduzierung von Arbeitsschritten zur Herstellung einer Mehrzahl an Ausweis-, Wert- oder Sicherheitsdokumenten 100 aus. Dadurch lässt sich Durchlaufzeit und auch die Taktzeit beim Herstellprozess reduzieren.

### BEZUGSZEICHENLISTE

- 100: Ausweis-, Wert- oder Sicherheitsdokument
- 102: Einband
- 104: Passbuchblock
- 106: Datenkarte
- 108: Passbuchseiten
- 110: Vorsatzblatt
- 112: Fälzelband
- 114: Naht
- 116: Passbild
- 118: Daten oder Informationen
- 120: Lasche
- 121: Überlappungsbereich
- 122: Mittellinie
- 124: Außenseite des Vorsatzblattes
- 126: Innenseite des Einbandes
- 128: Passbuchrohling
- 200: Handhabungsvorrichtung
- 202: Halteplatte
- 204: erster Sauggreifer
- 206: zweiter Sauggreifer
- 208: erhabener Bereich
- 208a: erster erhabener Teilbereich
- 208b: zweiter erhabener Teilbereich
- 210: vertiefter Bereich
- 210a: Kartenbereich
- 210b: Laschenbereich
- 212: Saugleitung
- 214: Unterdruckanschluss
- 216: Durchführung
- 218: Balg
- 220: Montageplatte
- 222: Roboterarmteil
- 224: Distanzhalter
- 226: Lagerplatte
- 228: Anschlussnippel
- 230: lange Kante
- 232: kurze Kante
- 234a: erste Stufe
- 234b: zweite Stufe
- 236: erste Ebene
- 238: zweite Ebene
- 240: Greiferanordnung erster Greifer
- 242: Aussparungen
- 244: Durchtritt (Ausnehmung)
- 246: Montageleiste
- 248: Verteiler
- 250: Schrauben
- 260: Greiferanordnung zweiter Greifer

## Patentansprüche

1. Handhabungsvorrichtung (200) zur Handhabung von mehreren Dokumententeilen eines Ausweis-, Wert- oder Sicherheitsdokuments (100), mit einer Halteplatte (202), an der ein erster Sauggreifer (204) zum lösbaren Fixieren eines ersten Dokumententeils an der Halteplatte (202) angeordnet ist, und an der ein, von dem ersten Sauggreifer (204) beabstandeter, zweiter Sauggreifer (206) angeordnet ist zum lösbaren Fixieren eines zweiten Dokumententeils an der Halteplatte (202) während zumindest zeitweise der erste Dokumententeil ebenfalls an der Halteplatte (202) lösbar fixiert ist, **dadurch gekennzeichnet, dass** die Halteplatte (202) einen erhabenen Bereich (208) und einen zumindest gegenüber dem erhabenen Bereich (208) vertieften Bereich (210) umfasst, dass der eine aus erstem Sauggreifer (204) und zweitem Sauggreifer (206) im erhabenen Bereich (208) angeordnet ist, und dass der andere aus erstem Sauggreifer (204) und zweitem Sauggreifer (206) im vertieften Bereich (210) angeordnet ist.

2. Handhabungsvorrichtung (200) nach Anspruch 1, **dadurch gekennzeichnet, dass** die Halteplatte (202) mit den Sauggreifern (204, 206) ausgebildet ist, den ersten Dokumententeil in einer ersten Ebene (236) und den zweiten Dokumententeil in einer zweiten Ebene (238) zu fixieren.

3. Handhabungsvorrichtung (200) nach Anspruch 1 oder 2, **dadurch gekennzeichnet, dass** die Sauggreifer (204, 206) mittels einer Saugleitung (212) mit einem Unterdruckanschluss (214) verbunden sind, dass die Saugleitung (212) durch eine Durchführung (216) der Halteplatte (202) geführt ist oder in eine solche mündet derart, dass der Unterdruckanschluss (214) mit dem korrespondierenden Sauggreifer (204, 206) strömungsmechanisch verbunden ist.

4. Handhabungsvorrichtung (200) nach einem der Ansprüche 1 bis 3, **dadurch gekennzeichnet, dass** der erste Sauggreifer (204) mittels einer ersten Unterdruckeinrichtung betätigbar ist, und dass der zweite Sauggreifer (206) mittels einer zweiten Unterdruckeinrichtung betätigbar ist.

5. Handhabungsvorrichtung (200) nach einem der Ansprüche 1 bis 4, **dadurch gekennzeichnet, dass** die Sauggreifer (204, 206) als Balgsauger mit einem bezüglich ihrer Längsachse komprimierbaren Balg (218) gebildet sind.

6. Handhabungsvorrichtung (200) nach einem der Ansprüche 1 bis 5, **dadurch gekennzeichnet, dass** eine Montageplatte (220) zur Festlegung der Handhabungsvorrichtung (200) an einem Roboterarm oder einem Roboterarmteil (222) vorhanden ist, und dass die Montageplatte (220) mittels eines oder mittels mehrerer Distanzhalter (224) von der Halteplatte (202) beabstandet angeordnet ist.

7. Handhabungsvorrichtung (200) nach einem der Ansprüche 1 bis 6, **dadurch gekennzeichnet, dass** die Halteplatte (202) an einer Lagerplatte (226) festgelegt ist, und dass an der Lagerplatte (226) Anschlussnippel (228) zur Anbindung der Sauggreifer (204, 206) angeordnet sind.

8. Verfahren zum Einlegen zumindest eines ersten Dokumententeils und zumindest eines zweiten Dokumententeils eines Ausweis-, Wert- oder Sicherheitsdokuments (100) in eine Vorrichtung zu deren Weiterverarbeitung, umfassend die Schritte:
- Fixieren des ersten Dokumententeils an einer Halteplatte (202) einer Handhabungsvorrichtung (200) nach einem der Ansprüche 1 bis 7 mittels eines ersten Sauggreifers (204);
- Fixieren eines zweiten Dokumenteils an der Halteplatte (202) der Handhabungsvorrichtung (200) mittels eines vom ersten Sauggreifer (204) beabstandeten zweiten Sauggreifers (206) während zumindest zeitweise der erste Dokumententeil ebenfalls an der Halteplatte (202) lösbar fixiert ist; und
- Lösen des ersten Dokumententeils vom ersten Sauggreifer (204) und Lösen des zweiten Dokumententeils vom zweiten Sauggreifer (206) und damit Einlegen des ersten Dokumententeils und des zweiten Dokumententeils in die Vorrichtung zu deren Weiterverarbeitung.

9. Verfahren nach Anspruch 8, **dadurch gekennzeichnet, dass** die Vorrichtung zur Weiterverarbeitung eine Rütteleinrichtung ist, und dass der erste Dokumententeil und der zweite Dokumententeil durch Rütteln zueinander ausgerichtet werden.

## Claims

1. A handling device (200) for handling a plurality of document parts of an identity document, document of value or security document (100), comprising a holding plate (202) on which a first vacuum gripper (204) for removably fixing a first document part to the holding plate (202) is arranged, and on which a second vacuum gripper (206) spaced from the first vacuum gripper (204) is arranged for removably fixing a second document part to the holding plate (202) while at least temporarily the first document part is also removably fixed to the holding plate (202), **characterized in that** the holding plate (202) comprises a raised region (208) and at least in contrast to the raised region (208) a recessed region (210), **in that** the one of the first vacuum gripper (204) and the second vacuum gripper (206) is arranged in the raised region (208), and **in that** the other of the first vacuum gripper (204) and the second vacuum gripper (206) is arranged in the recessed region (210).

2. The handling device (200) according to claim 1, wherein the holding plate (202) with the vacuum grippers (204, 206) is designed to fix the first document part in a first plane (236) and the second document part in a second plane (238).

3. The handling device (200) according to claim 1 or 2, wherein the vacuum grippers (204, 206) are connected to a vacuum connection (214) by a suction line (212), that the suction line (212) is guided through a passage (216) of the holding plate (202) or flow into it in such a way that the vacuum connection (214) is fluidly connected to the corresponding vacuum grippers (204, 206).

4. The handling device (200) according to any of claims 1 to 3, wherein the first vacuum gripper (204) can be actuated by a first vacuum device, and that the second vacuum gripper (206) can be actuated by a second vacuum device.

5. The handling device (200) according to any of claims 1 to 4, wherein the vacuum grippers (204, 206) are formed as bellows suction device with a bellows (218) compressible to their longitudinal axis.

6. The handling device (200) according to any of claims 1 to 5, wherein a mounting plate (220) is provided for fixing the handling device (200) to a robot arm or a robot arm part (222), and the mounting plate (220) is spaced from the holding plate (202) by one or more spacer (224).

7. The handling device (200) according to any of claims 1 to 6, wherein the holding plate (202) is fixed to a bearing plate (226), and connection nipples (228) are arranged on the bearing plate (226) for connecting the vacuum grippers (204, 206).

8. A Method for inserting at least a first document part and at least a second document part of an identity document, document of value or security document (100) into an apparatus for a further processing, comprising the steps of:
- Fixing the first document part to a holding plate (202) of a handling device (200) according to any of claims 1 to 7 by a first vacuum gripper (204);
- Fixing a second document part to the holding plate (202) of the handling device (200) by a second vacuum gripper (206) spaced from the first vacuum gripper (204) while at least temporarily the first document part is also removably fixed to the holding plate (202); and
- Releasing the first document part from the first vacuum gripper (204) and releasing the second document part from the second vacuum gripper (206) and thus inserting the first document part and the second document part into the device for a further processing.

9. Method according to claim 8, wherein the device for a further processing is a jogging unit, and that the first document part and the second document part are aligned to each other by jogging.

## Revendications

1. Dispositif de manipulation (200) destiné à manipuler plusieurs parties d'un document d'identité, de valeur ou de sécurité (100), comprenant une plaque de support (202) sur laquelle est disposée une première ventouse (204), destinée à la fixation détachable d'une première partie de document à la plaque de support (202), et sur laquelle est disposée une deuxième ventouse (206) qui est espacée de la première ventouse (204) et est destinée à la fixation détachable d'une deuxième partie de document à la plaque de support (202), pendant que la première partie de document est elle aussi fixée au moins temporairement de façon détachable à la plaque de support (202), **caractérisé en ce que** la plaque de support (202) comprend une zone en relief (208) et une zone (210) qui est en creux, au moins par rapport à la zone en relief (208), **en ce qu'**une ventouse parmi la première ventouse (204) et la deuxième ventouse (206) est disposée dans la zone en relief (208) et **en ce que** l'autre ventouse parmi la première ventouse (204) et la deuxième ventouse (206) est disposée dans la partie en creux (210).

2. Dispositif de manipulation (200) selon la revendication 1, **caractérisé en ce que** la plaque de support (202), avec les ventouses (204, 206), est réalisée pour fixer la première partie de document dans un premier plan (236) et la deuxième partie de document dans un deuxième plan (238).

3. Dispositif de manipulation (200) selon la revendication 1 ou 2, **caractérisé en ce que** les ventouses (204, 206) sont reliées au moyen d'une conduite d'aspiration (212) à un raccord à vide (214), **en ce que** la conduite d'aspiration (212) passe dans une traversée (216) de la plaque de support (202) ou débouche dans une telle traversée, de manière à ce que le raccord à vide (214) soit relié du point de vue fluidique à la ventouse (204, 206) correspondante.

4. Dispositif de manipulation (200) selon l'une des revendications 1 à 3, **caractérisé en ce que** la première ventouse (204) peut être actionnée à l'aide d'un premier dispositif à vide, et **en ce que** la deuxième ventouse (206) peut être actionnée à l'aide d'un deuxième dispositif à vide.

5. Dispositif de manipulation (200) selon l'une des revendications 1 à 4, **caractérisé en ce que** les ventouses (204, 206) sont réalisées sous forme de ventouses à soufflet, avec un soufflet (218) qui peut être comprimé par rapport à leur axe longitudinal.

6. Dispositif de manipulation (200) selon l'une des revendications 1 à 5, **caractérisé en ce qu'**il est prévu une plaque de montage (220) pour la fixation du dispositif de manipulation (200) à un bras de robot ou une partie d'un bras de robot (222), et **en ce que** la plaque de montage (220) est disposée à distance de la plaque de support (202) à l'aide d'un ou plusieurs éléments d'espacement (224).

7. Dispositif de manipulation (200) selon l'une des revendications 1 à 6, **caractérisé en ce que** la plaque de support (202) est fixée à une plaque d'appui (226), et **en ce que** la plaque d'appui (226) comporte des mamelons de raccordement (228) destinés au raccordement des ventouses (204, 206).

8. Procédé d'insertion d'au moins une première partie de document et d'au moins une deuxième partie de document d'un document d'identité, de valeur ou de sécurité (100) dans un dispositif de traitement ultérieur de celles-ci, comprenant les étapes suivantes :
- fixation de la première partie de document sur une plaque de support (202) d'un dispositif de manipulation (200) selon l'une des revendications 1 à 7, au moyen d'une première ventouse (204) ;
- fixation d'une deuxième partie de document sur la plaque de support (202) du dispositif de manipulation (200) au moyen d'une deuxième ventouse (206) espacée de la première ventouse (204), pendant que la première partie de document est elle aussi fixée de manière détachable au moins temporairement à la plaque de support (202) ; et
- détachement de la première partie de document de la première ventouse (204) et détachement de la deuxième partie de document de la deuxième ventouse (206) et, de ce fait, insertion de la première partie de document et de la deuxième partie de document dans le dispositif, en vue de leur traitement ultérieur.

9. Procédé selon la revendication 8, **caractérisé en ce que** le dispositif de traitement ultérieur est un dispositif à vibrations, et **en ce que** la première partie de document et la deuxième partie de document sont alignées l'une par rapport à l'autre sous l'effet de vibrations.
